# EUROPÄISCHE PATENTANMELDUNG

(11) **EP 1 932 656 A2**
(43) Veröffentlichungstag der Anmeldung: **18.06.2008**
(21) Anmeldenummer: 07019783.5
(22) Anmeldetag: 10.10.2007
(51) Int. Cl.: B30B 15/06

(54) **Verfahren zur Verringerung der Planparallelitätstoleranz einer Presse, sowie Prepreg zur Durchführung des Verfahrens**

(30) Priorität: 12.12.2006 DE 102006058474
(71) Anmelder: BRANDENBURGER ISOLIERTECHNIK GMBH & Co., 76829 Landau/pfalz (DE)
(72) Erfinder: Schwab, Peter, 76833 Walsheim (DE)
(74) Vertreter: Kesselhut, Wolf

(57) **Zusammenfassung**

Ein Verfahren zur Verringerung der Planparallelitätstoleranz einer Presse (1), welche eine erste und eine zweite planparallele Pressfläche (6, 14) umfasst, die durch Beaufschlagung mit einer Druckkraft gegeneinander anstellbar sind, zeichnet sich dadurch aus, dass ein ein ungehärtetes duroplastisches Kunstharz enthaltendes Prepreg (22) zwischen der ersten Pressfläche (6) und einer die Druckkraft auf die erste Pressfläche (6) übertragenden Stützfläche (8,) angeordnet wird, die erste und zweite Pressfläche (6, 14) mit einer vorgegebenen Druckkraft beaufschlagt werden, und das Prepregs (22) thermisch ausgehärtet wird.

## Beschreibung

Die Erfindung betrifft eine Verfahren zur Verringerung der Planparallelitätstoleranz einer Presse sowie einen Prepreg zur Durchführung des Verfahrens gemäß dem Oberbegriff von Anspruch 1 und 16.

Auf dem Gebiet der mechanischen Pressen, wie beispielsweise Pressen zum Verpressen von Sperrholz und Laminat, oder auch Pressen zum Aneinanderpressen der beiden Werkzeughälften von Kunststoff-Spritzgussformen, besteht der Wunsch, dass die beiden aneinander anstellbaren Pressflächen nach Möglichkeit nur sehr geringe Abweichungen von der idealen Planparallelität aufweisen sollen.

Dieser Wunsch nach geringen Planparallelitätstoleranzen ist dadurch bedingt, dass hierdurch sichergestellt wird, dass die beiden Werkzeughälften z.B. beim Kunststoff-Spritzguss möglichst gleichmäßig schließen und keine Schiefstellung der Werkzeughälften oder gar Spalte auftreten. Zudem hat ein ungleichmäßiges Schließen der Werkzeughälften im Kunststoff-Spritzguss deutliche Auswirkungen auf die Qualität der hergestellten Teile, was beispielsweise dazu führen kann, dass eine aufwändige Nachbearbeitung der Spritzgussteile erforderlich ist, um z.B. Spritzgussränder zu beseitigen, die dadurch entstehen, dass das mit hohem Druck eingespritzte flüssige Kunststoffmaterial in Bereiche der aneinander liegenden planen Dichtflächen eintritt, die aufgrund von zu großen Planparallelitätstoleranzen der Pressflächen mit einer zu geringen Druckkraft aneinander gepresst werden.

Da die üblicherweise eingesetzten Pressen in der Regel einen sandwichartigen Aufbau besitzen, bei denen unterhalb der Pressflächen noch zumindest eine Stützfläche und gegebenenfalls dazwischen liegende Lagen aus Thermoisolierwerkstoff, insbesondere faserverstärktem Kunststoff, zum Einsatz gelangen, sind zur Erzielung einer möglichst hohen Planparallelität der Pressflächen vergleichsweise hohe Kosten erforderlich, da sich im ungünstigsten Falle die Planparallelitätsabweichungen aller einer Pressfläche zugeordneten Komponenten addieren, und demgemäss eine sehr aufwändige technische Bearbeitung dieser einzelnen Komponenten erforderlich ist, um eine vorgegebene geringe Gesamt-Planparallelitätstoleranz der Pressflächen zu erhalten.

Hinzu kommt bei thermischen Pressen, dass die beiden Pressflächen in der Regel nicht nur mit einer hohen Druckkraft gegeneinander angestellt werden, sondern dass zudem auch eine vergleichsweise hohe Temperatur der Pressflächen benötigt wird, um den Umformprozess von Bauteilen überhaupt in der gewünschten Weise vornehmen zu können. Hierbei sollte die höchste Genauigkeit, d.h. die geringste Planparallelitätstoleranz, nach Möglichkeit dann erreicht werden, wenn der entsprechende Druck und - je nach Verfahren - auch die maximale Formgebungstemperatur erreicht sind.

Da die bekannten mechanischen Pressen in der Regel einen nicht homogenen Aufbau besitzen und die einzelnen einer Pressfläche zugeordneten Komponenten üblicherweise bei Raumtemperatur auf die erforderliche Genauigkeit hin überarbeitet werden, stellt sich in der Praxis aufgrund der druckbedingten oder temperaturbedingten Verformung der Bauteile in der Regel zusätzlich eine Geometrieänderung ein, die dazu führt, dass die Planparallelitätstoleranzen im Arbeitsbereich der Presse mitunter deutlich größer sind, als die Summe der Toleranzen der einzelnen Bauteile im drucklosen Zustand, bzw. bei Raumtemperatur.

Demgemäss ist es eine Aufgabe der vorliegenden Erfindung, ein Verfahren zu schaffen, mit welchem sich die Gesamt-Planparallelitätstoleranz einer mechanischen Presse, welche zwei planparallele aneinander anstellbare Pressflächen besitzt, auf einfache und kostengünstige Weise verringern und sich aufaddierende Ungleichmäßigkeiten ausgleichen lassen.

Diese Aufgabe wird erfindungsgemäß durch ein Verfahren mit den Merkmalen von Anspruch 1 sowie durch einen Prepreg zur Durchführung des Verfahrens mit den Merkmalen von Anspruch 16 gelöst.

Weitere Merkmale der Erfindung sind in den Unteransprüchen enthalten.

Gemäß der Erfindung wird die Planparallelitätstoleranz einer mechanischen Presse mit einer ersten und zweiten planparallelen Pressfläche, von denen zumindest einer Pressfläche eine die Druckkraft auf diese Pressfläche übertragende Stützfläche zugeordnet ist, dadurch verringert, dass zwischen die Stützfläche und die erste Pressfläche ein Prepreg eingebracht wird, welcher ein ungehärtetes duroplastisches Kunstharz enthält.

Nach dem Einbringen des Prepregs, welcher eine Dicke im Bereich von 0,1 bis 1 mm bevorzugt 0,4 mm besitzt, werden die beiden Pressflächen aneinander angestellt, mit einer vorgegebenen Druckkraft beaufschlagt, und dem Prepreg wird Wärmeenergie zugeführt. Dadurch schmilzt das ungehärtete duroplastische Kunstharz des Prepregs auf und verteilt sich nach Art einer Flüssigkeit zwischen den aneinander liegenden Flächen, beispielsweise der Oberseite der die Druckkraft übertragenden Stützfläche und der Unterseite der Pressfläche. Hierbei wandert das Kunstharz aufgrund des Bestrebens einer Flüssigkeit, einen im wesentlichen gleichen Druck innerhalb der gesamten Flüssigkeit herzustellen, aus den nahe beieinander liegenden Bereichen in die weiter entfernt voneinander liegenden Bereiche der einander gegenüber liegenden Flächen, zwischen denen das Prepreg sandwichartig angeordnet ist.

In einem nächsten Schritt wird das Prepreg ausgehärtet, was durch die zugeführte Wärmeenergie erfolgt, welche insbesondere bei thermischen Pressen bevorzugt durch Erhitzen der entsprechenden Heizplatten der Presse auf Temperaturen von 80 bis 200 °C, vorzugsweise von 140 bis 180 °C bereit gestellt werden kann.

Nachdem das Prepreg bevorzugt unter Beibehaltung einer die beiden Pressflächen gegeneinander drängenden Druckkraft ausgehärtet wurde, ergibt sich eine Gesamt-Planparallelitätstoleranz der beiden Pressflächen, die insgesamt gegenüber der Summe der Planparallelitätstoleranzen der einzelnen Bauteile reduziert ist, was insbesondere für den Arbeitsbereich der Presse gilt, in dem sich die Gesamt-Planparallelitätstoleranz der Presse in der Regel aufgrund der thermisch- oder druckbedingten Deformation der Bauteile erhöht.

Durch die Anwendung des erfindungsgemäßen Verfahrens lassen sich bei einer vorgegebenen Planparallelitätstoleranz der Presse die Fertigungskosten in vorteilhafter Weise reduzieren, da lediglich die Oberflächen der gegeneinander anstellbaren Pressflächen mit einer entsprechend hohen Genauigkeit bearbeitet werden müssen, die darunter liegenden Komponenten, wie Thermoisolierplatten und Stützplatten hingegen mit einer erheblich geringeren Genauigkeit- und damit erheblich kostengünstiger - gefertigt werden können.

Nach einer weiteren Ausführungsform des erfindungsgemäßen Verfahrens werden die erste und die zweite Pressfläche während des Aushärtens des Prepregs mit der vorgegebenen Druckkraft beaufschlagt. Diese vorgegebene Druckkraft kann zwischen 0,2 N/mm² und 15 N/mm² liegen und beträgt bevorzugt zwischen 1 N/mm² und 5 N/mm².

Hierbei ist es von besonderem Vorteil, wenn die Druckkraft während des Aushärtens des Prepregs variiert wird.

Es hat sich als vorteilhaft herausgestellt, die Druckkraft nach einer ersten anfänglichen Erhöhung, bei der sich das Harz aufgrund der zugeführten Wärmeenergie verflüssigt, kurzzeitig wieder zu verringern, beispielsweise auf lediglich 30 bis 70 % der zuvor eingebrachten Druckkraft, und die Druckkraft im Anschluss daran wieder auf den vorhergehenden Wert oder auch auf einen noch höher liegenden Wert zu erhöhen, wenn sich das Harz nach der Verflüssigung im Verlauf des Aushärtvorgangs hin wieder verfestigt. Einzelheiten über die Art des Harzes und des Trägermaterials werden nachfolgend noch genauer beschrieben.

Diese Verringerung der Druckkraft verhindert, dass das verflüssigte duroplastische Kunstharz seitlich aus den Randbereichen des Prepregs austritt, der bevorzugt eine der Form der zugeordneten Pressfläche bzw. der Stützfläche entsprechende Größe aufweist.

Anders ausgedrückt wird durch die Erhöhung der Druckkraft in einer ersten Phase des Aushärtvorgangs das im Prepreg enthaltene, verflüssigte Kunstharz gleichmäßig zwischen der Pressfläche und der Stützfläche verteilt, dann wird die Druckkraft reduziert, um einen übermäßigen Austritt des verflüssigten Kunstharzes aus den Randbereichen des Prepregs zu verhindern, und im Anschluss daran wird während der Aushärtung des Harzes die Druckkraft wiederum erhöht, um bei fortschreitender Verfestigung des noch nicht ganz ausgehärteten Harzes dieses in die mitunter erst bei hohen Pressdrücken entstehenden Zwischenräume einzubringen. Dies geschieht in einem Druckbereich, der nahe dem oder gar im Arbeitsbereich der Presse liegt. Hierdurch können in vorteilhafter Weise auch diejenigen Planparallelitätstoleranzen der Presse reduziert werden, die sich erst bei einem vergleichsweise hohen Druck in Folge einer plastischen oder elastischen Verformung der die Druckkraft übertragenden Bauteile der Presse ergeben.

Um den Austritt von flüssigem Kunstharz aus den Randbereichen des Prepregs weiter zu verringern, kann es vorgesehen sein, im Bereich der Ränder des Prepregs eine bevorzugt umlaufende Dichtung, beispielsweise eine geschlossen umlaufende Silikondichtung mit einer Breite von z. B. 1 cm oder dergleichen, vorzusehen, die bei einer Beaufschlagung der Pressflächen sowie des Prepregs mit der vorgegebenen Druckkraft den innen liegenden, mit flüssigem Harz gesättigten Bereich des Prepregs nach außen hin gegen einen Austritt des Harzes abdichtet. Wie die Anmelderin gefunden hat, können hierdurch nicht nur die Harzverluste deutlich reduziert werden, sondern aufgrund des erhöhten Drucks innerhalb des flüssigen Harzmaterials des Prepregs auch die Planparallelitätstoleranzen weiter verringert werden.

Gemäß einem weiteren der Erfindung zu Grunde liegenden Gedanken wird das Prepreg zusammen mit einer ersten Zwischenlage aus einem gehärteten Kunststoffmaterial zwischen der Stützfläche und der ersten Pressfläche angeordnet. Das Kunststoffmaterial ist hierbei bevorzugt ein bekannter Isolationswerkstoff, beispielsweise glasfaserverstärkter Kunststoff, auf den das Prepreg, d. h. die gegenüber diesem gehärteten Kunststoffmaterial mit einer Dicke im Bereich von z.B. 5 mm und 50 mm, insbesondere 30 mm, vergleichsweise dünne Lage aus Fasergewebe und darin eingebrachtem Harz mit einer Dicke von bevorzugt 0,4 mm aufgebracht wird. Ebenso kann es vorgesehen sein, sowohl auf die Frontseite als auch auf die Rückseite der Zwischenlage aus gehärtetem Kunststoffmaterial jeweils ein Prepreg aufzubringen, um Fertigungstoleranzen sowohl zwischen Stützfläche und Zwischenlage als auch zwischen Zwischenlage und Unterseite der Pressfläche in erfindungsgemäßer Weise zu verringern, und hierdurch die Planparallelität der Presse insgesamt zu erhöhen. Ein weiterer Vorteil der sich hierdurch ergibt, ist darin zu sehen, dass die Zwischenlagen aus gehärtetem Kunststoffmaterial in vorteilhafter Weise als Trägerkörper oder Trägersubstrat für die Prepregs eingesetzt werden können, wodurch sich die Handhabung derselben erheblich vereinfacht und sich aufgrund der artgleichen Verbindung des Harzmaterials des Prepregs mit dem Kunststoffmaterial der Zwischenlage, nach dem Aushärten eine hochfeste Verbindung ergibt. Die erste Zwischenlage ist demgemäß bevorzugt ebenfalls ein faserverstärkter Kunststoff, z.B. ein glasfaserverstärktes Epoxydharz, Phenolharz, Polyesterharz oder Silikonharz, je nach Einsatzzweck der Presse.

Nach einer weiteren Ausführungsform des erfindungsgemäßen Verfahrens ist das Prepreg zwischen der ersten Zwischenlage aus gehärtetem Kunststoffmaterial und einer weiteren, als Hitzeschild dienenden Zwischenlage eingebracht, wobei die Zwischenlagen ihrerseits zwischen der Stützfläche und der ersten Pressfläche angeordnet sind. Hierbei besteht die als Hitzeschild dienende zweite Zwischenlage bevorzugt aus einem Werkstoff mit einer geringen Wärmeleitfähigkeit und hoher Hitzebeständigkeit , wie er insbesondere in bekannten Hitzeschilden von Pressen eingesetzt wird, die mit einer Heizeinrichtung zur Zufuhr von thermischer Energie während des Pressvorgangs ausgerüstet sind, um die erste Pressfläche, die in diesem Falle bevorzugt als Heizplatte ausgestaltet ist, gegenüber der die Druckkraft übertragenden Stützfläche thermisch zu isolieren. Als besonders vorteilhaft haben sich hierbei gehärtete, besonders hochtemperaturbeständige duroplastische Kunststoffe, beispielsweise spezielle faserverstärkte Epoxydharze, sowie anorganische Stoffe, wie Glimmer, erwiesen.

Nach einem weiteren der Erfindung zu Grunde liegenden Gedanken können nicht nur, wie zuvor beschrieben, zwei oder mehrere Prepregs zwischen der ersten Pressfläche und der Stützfläche angeordnet werden, beispielsweise um bei alten Pressen, bei denen sich das Material über die Jahre hinweg schon sehr stark gesetzt hat, größere Maßtoleranzen auszugleichen, sondern es können auch der zweiten Pressfläche ein oder mehrere Prepregs zugeordnet werden, um ebenfalls die Maßtoleranzen der zweiten Pressfläche für sich genommen zu verringern. Hierbei erfolgt die Anwendung des erfindungsgemäßen Verfahrens bevorzugt gleichzeitig sowohl bei den der ersten Pressfläche als auch bei den der zweiten Pressfläche zugeordneten Prepregs.

Die Prepregs, die auf dem Gebiet der Faserverbundtechnik bereits seit langem eingesetzt werden, und beispielsweise als Rollenmaterial industriell erhältlich sind, weisen bevorzugt eine Dicke im Bereich von 0,1 - 1 mm, insbesondere 0,2 - 0,6 mm, und besonders bevorzugt 0,4 mm auf

Bei dem erfindungsgemäßen Prepreg ist das duroplastische Kunstharz bevorzugt ein mehrfunktionelles, speziell modifiziertes Epoxydharz mit einem bei Raumtemperatur latenten, bei erhöhter Temperatur, vorzugsweise bei 140 bis 180 °C, hochreaktiven Härtersystem. Daneben sind auch gegebenenfalls vorverdickte Vinylesterharze und Polyesterharze verwendbar. Die Harze können durch Zufuhr von thermischer Energie verflüssigt und ausgehärtet werden. Sie sind im Prepreg in flächige Fasergebilde imprägniert, die als Stützmaterial dienen, insbesondere in Glasfaservliese, Glasfasermatten und Glasfasergewebe. Besonders geeignet sind Glasfasergewebe aus Rovings mit einer Strangbreite von z.B. 1,5 bis 2mm und einer Stranghöhe von ca. 0,35 mm. Alternativ umfasst das Prepreg nach einer weiteren bevorzugten Ausführungsform, die sich in Versuchen als in Hinblick auf die Verringerung der Planparallelitätstoleranzen besonders vorteilhaft herausgestellt hat, ein Vlies als Trägermaterial. Bei Einsatz eines mit einem Epoxydharz imprägnierten Glasfaservlieses ergibt sich eine sehr gute Verarbeitbarkeit des Materials und zudem ein deutlich reduzierter Harzaustritt aus den Randbereichen des Prepregs während des Aushärtens desselben unter Druck bei der Durchführung des erfindungsgemäßen Verfahrens.

Nach einem weiteren, der Erfindung zu Grunde liegenden Gedanken zeichnet sich ein Prepreg zur Durchführung des zuvor genannten Verfahrens dadurch aus, dass dieser bei einer Dicke im Bereich zwischen 0,1 und 1 mm, insbesondere 0,4 - 0,6 mm, eine Größe besitzt, die im Wesentlichen der Größe der Pressfläche, bzw. der Stützplatte entspricht.

Hierbei hat es sich als besonders vorteilhaft herausgestellt, wenn das üblicherweise als Rollenware erhältliche bahnförmige Prepregmaterial in einer der Länge der Pressfläche entsprechenden Länge von der jeweiligen Rolle abgerollt und abgetrennt wird, wobei ggf. ein verbleibender seitlicher Überstand des Prepregmaterials nach einem Anstellen der Pressflächen ebenfalls bequem abgetrennt werden kann.

Um die in der zuvor genannten Weise bereitgestellten Prepregs auch bei einem Masseneinsatz besonders einfach handhaben zu können, können diese weiterhin in vorteilhafter Weise auf die erste Zwischenlage als Trägerkörper aufgebracht werden, wobei der aus zwei Lagen bestehende Sandwich in diesem Falle bevorzugt eine der Größe des Prepregs entsprechende Größe aufweist. Besonders bevorzugt wird hierbei das Prepreg aus ungehärtetem duroplastischem Kunstharzmaterial nach Art eines Sandwichs zwischen der ersten Zwischenlage aus einem Thermoisolationswerkstoff mit einer Dicke im Bereich von z.B. 1 bis 2,5 cm und einer demgegenüber hitzebeständigeren zuvor beschriebenen zweiten Zwischenlage eingebracht, welcher insbesondere ein Hochtemperaturisolationswerkstoff ist, wie er bei Hitzeschilden in thermischen Pressen zum Einsatz gelangt, um die mitunter mehrere einhundert °C heiße Heizplatte von den übrigen druckübertragenden Pressenkomponenten, insbesondere der Stützfläche, thermisch zu isolieren.

Durch die zuvor beschriebene sandwichartige Anordnung von Thermoisolierwerkstoff, Prepreg und Hitzeschild lassen sich die Prepregs nicht nur mit geringem Aufwand lagern und transportieren, sondern können auch leicht bei älteren Pressen im Austausch gegen die dort eingesetzten Hitzeschilder und Thermoisolationsplatten nachgerüstet werden, um bei diesen Pressen durch Anwendung des erfindungsgemäßen Verfahrens die Planparallelitätstoleranzen in kostengünstiger Weise zu reduzieren.

Schließlich wird nach einem weiteren Aspekt des der Erfindung zu Grunde liegenden Gedankens die Verwendung des zuvor beschriebenen Prepregs zur Verringerung der Planparallelitätstoleranzen von mechanischen Pressen beansprucht.

Die Erfindung wird nachfolgend mit Bezug auf die Zeichnungen anhand einer bevorzugten Ausführungsform beschrieben.

In den Zeichnungen zeigen
- Fig. 1: eine schematische Querschnittsdarstellung einer mechanischen Presse zur Veranschaulichung des Grundaufbaus der erfindungsgemäßen Struktur zur Verringerung der Planparallelitätstoleranzen, und
- Fig. 2: eine vergrößerte Detailansicht einer mit einem Prepreg und einer Thermoisolierplatte versehenen Aufspannplatte bzw. eines Aufspanntisches in einer mechanischen Presse.

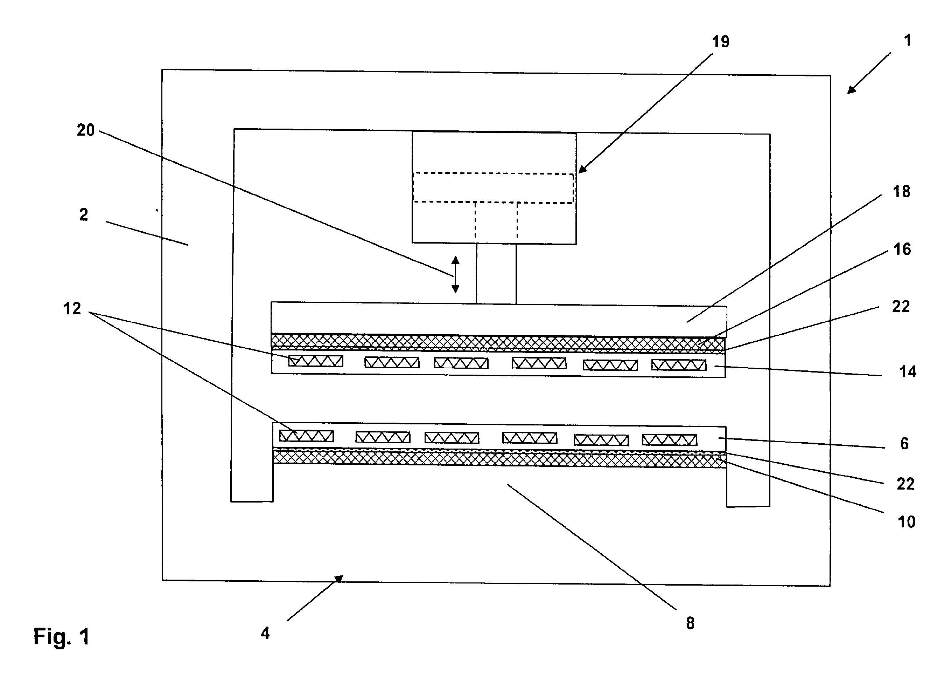

Wie in Fig. 1 gezeigt ist, weist eine mechanische Presse 1 einen Rahmen 2 auf, der bevorzugt an seinem bodenseitigen Ende 4 eine erste Pressfläche 6 besitzt, die bei der in Fig. 1 gezeigten Presse als Aufspanntisch für ein nicht näher gezeigtes Werkzeug, beispielsweise die eine Hälfte einer Kunststof-Spritzgussform, dient.

Die erste Pressfläche stützt sich hierbei über eine bodenseitige Stützfläche 8 am Rahmen 2 ab, wobei zwischen der ersten Pressfläche 6 und der bodenseitigen Stützfläche 8 eine erste Zwischenlage 10 aus Thermoisolierwerkstoff mit einer Stärke von beispielsweise 3 bis 15 mm angeordnet ist, um die durch schematisch angedeutete Heizelemente 12 bevorzugt heizbare erste Pressfläche 6 thermisch gegenüber der bodenseitigen Stützfläche 8, bzw. gegenüber dem Rahmen 2 zu isolieren. Die Heizelemente können z.B. Heizpatronen oder von Heizflüssigkeit durchströmte Kanäle sein.

In entsprechender Weise ist der ersten Pressfläche 6 gegenüberliegend eine zweite Pressfläche 14 zugeordnet, die über eine zweite Thermoisolierplatte 16 an einer zweiten Stützfläche 18 aufgenommen ist, welche über einen - oder auch mehrere - Stellzylinder, insbesondere Hydraulikzylinder 19, in Richtung des Pfeils 20 relativ zur ersten Pressfläche 6 verfahrbar ist, um die im Wesentlichen planparallele zweite Pressfläche 14 mit einer vorgegebenen Druckkraft gegen die erste Pressfläche 6 anzustellen und hierdurch ein zwischen der ersten Pressfläche 6 und der zweiten Pressfläche 12 angeordnetes Formteil, wie beispielsweise eine Spanplatte oder dergleichen, oder aber die beiden Werkzeughälften einer Spritzgussform beidseitig für einen vorgegebenen Zeitraum mit einer entsprechenden Druckkraft zu beaufschlagen.

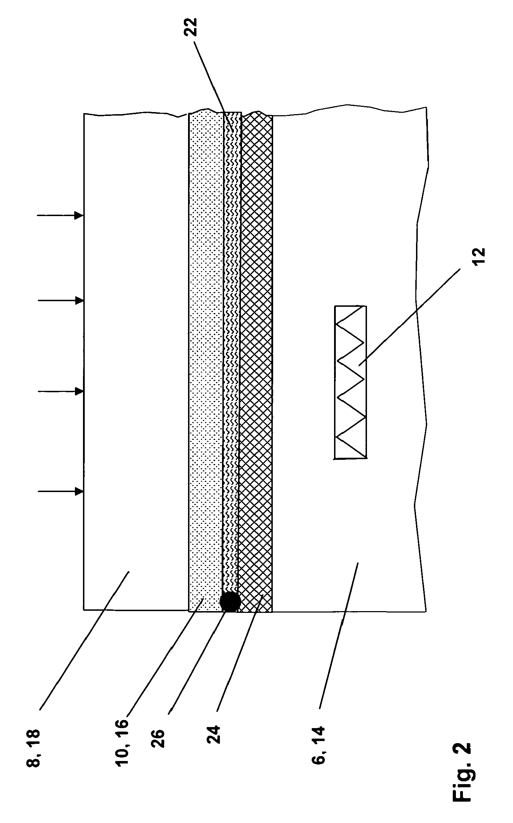

Wie der Darstellung von Fig. 1 sowie auch der Darstellung von Fig. 2 weiterhin entnommen werden kann, ist zwischen der ersten bodenseitigen Stützfläche 8 und der ersten Pressfläche 6 sowie bevorzugt auch zwischen der zweiten Stützfläche 18 und der zugeordneten zweiten Pressfläche 14 in erfindungsgemäßer Weise ein Prepreg 22 angeordnet, der dazu dient, bei der gezeigten Presse die Planparallelitätstoleranzen der ersten sowie auch der zweiten Pressfläche 6, 14 maßgeblich zu reduzieren.

Um die gesamte Planparallelitätstoleranz der Presse 1 in erfindungsgemäßer Weise auf ein Maß zu verringern, das unterhalb der Summe der Planparallelitätstoleranzen der einzelnen Komponenten liegt, wird zwischen der bodenseitigen Stützfläche 8 und der ersten Pressfläche 6 sowie bevorzugt auch zwischen der zweiten Stützfläche 18 und der zweiten Pressfläche 14 jeweils wenigstens ein Prepreg 22 angeordnet, der eine der Stützfläche 8, 18, bzw. der ersten und zweiten Pressfläche 6, 14 entsprechende Größe aufweist, und der eine Dicke im Bereich von bevorzugt 0,4 mm besitzt. Das Prepreg 22 besteht aus einem flächigen Fasergebilde, das mit einer Matrix aus einem duroplastischen Kunstharz imprägniert ist, welches zu Anfang ungehärtet ist. Das Prepreg 22 wird, wie in Fig. 1 gezeigt, erfindungsgemäß zwischen der bodenseitigen Stützfläche 8 und der Unterseite der ersten Pressfläche 6 eingelegt, welche beispielsweise eine Planparallelität von jeweils 0,05 mm besitzen.

In gleicher Weise wird ein entsprechendes Prepreg 22 bevorzugt zwischen der zweiten Stützfläche 18 und die zweite Pressfläche 14 angeordnet, was bei einer in Fig. 1 gezeigten thermischen Presse, bei der die zweite Pressfläche 14 ebenfalls als eine durch Heizelemente 12 beheizbare Heizplatte ausgestaltet ist, zwischen der eingefügten zweiten Zwischenschicht 16 aus einem Thermoisolierwerkstoff und der Rückseite der zweiten Pressfläche 14 erfolgen kann.

Nach dem Einlegen des oder der Prepregs 22, die bevorzugt schon vorkonfektioniert auf die entsprechenden Zwischenschichten 10, 16 aus Thermoisolierwerkstoff aufgebracht sind, wird Wärmeenergie durch die Heizelemente 12 zugeführt, der Zylinder 19 wird mit Druck beaufschlagt und die zweite Pressfläche 14 mit einer vorgegebenen Druckkraft gegen die ersten Pressfläche 6 angestellt, so dass das geschmolzene, aber noch ungehärtete Harzmaterial der Prepregs 22 in die vertieften Bereiche zwischen den ersten und zweiten Pressflächen 6, 14 sowie den ersten und zweiten Zwischenschichten 10, 16 aus Thermoisolierwerkstoff wandern kann, um sich nach Art einer Flüssigkeit in einem druckbeaufschlagten Gefäß zu verteilen.

Nachdem sich das geschmolzene ungehärtete duroplastische Harzmaterial der Prepregs 22 über einen bestimmten vorgegebenen Zeitraum hinweg, beispielsweise 10 bis 30 Minuten, zwischen den ersten und zweiten Pressflächen 6, 14 und den Stützflächen 8, 18 verteilt hat, wird bei der in Fig. 1 gezeigten thermischen Presse durch die über die Heizelemente 12 zugeführte Wärmeenergie das thermisch härtbare duroplastische Harzmaterial ausgehärtet, so lange, bis das Harz sich formstabil verfestigt hat.

Hierbei kann es von Vorteil sein, wenn die vom Hydraulikzylinder 19 ausgeübte Druckkraft zu Anfang des Aushärtprozesses, d.h. solange das Harz noch flüssig ist, lediglich auf einen sehr geringen Wert, beispielsweise 0,1 N/mm², eingestellt wird, um ein Herausquellen des Harzes aus den Rändern des Prepregs 22 zu verhindern, und nach beginnender Härtung des Harzes, d.h. bei fortgeschrittener Verfestigung, wiederum erhöht wird, derart, dass das Prepreg 22 zum Ende hin mit einer vergleichsweise hohen Druckkraft beaufschlagt wird, um das Harz des noch nicht vollständig ausgehärteten Prepregs auch in mitunter erst bei hohen Pressdrücken entstehende Zwischenräume einzubringen, die sich durch die plastische/elastische Verformung des Rahmens oder der ersten und zweiten Pressfläche, bzw. der Zwischenschichten 10, 16 etc. ergeben.

Nachdem das Harz in den Prepregs 22 nahezu vollständig ausgehärtet ist, oder auch bereits vorher, werden die erste und zweite Pressfläche 6, 14 wieder auseinander gefahren, und das Harz beispielsweise durch weiteres Heizen der Heizelemente 12 bis zur vollständigen Festigkeit ausgehärtet.

Wie von der Anmelderin gefunden wurde, lassen sich durch Einbringen von Prepregs 22 und Durchführen des erfindungsgemäßen Verfahrens die Maßtoleranzen der einzelnen Komponenten, welche einer jeden der beiden Pressflächen 6, 14 zugeordnet sind, insgesamt deutlich reduzieren, beispielsweise bis auf eine gesamte Planparallelitätstoleranz von 0,1 mm bei einer Einzeltoleranz der Stützflächen 8, 18, Zwischenlagen 10, 16 und Unterseiten der ersten und zweiten Pressfläche 6, 14 im Bereich von 0,05 mm. Es versteht sich hierbei, dass die Planparallelitätstoleranzen der ersten und zweiten Pressfläche 6, 14 zu Erhalt der zuvor genannten gesamten Planparallelitätstoleranz von 0,1 mm jeweils nur eine Planparallelitätstoleranz von 0,05 mm besitzen dürfen, was jedoch mit den heutigen Fertigungsmethoden, beispielsweise durch Überschleifen der gesamten Pressflächen 6, 14 technisch problemlos möglich ist.

Demgemäss besteht in fertigungstechnischer Hinsicht der bedeutende Vorteil des zuvor genannten Verfahrens darin, dass lediglich die auf die zu verpressenden Bauteile oder Werkzeughälften einwirkenden Pressflächen 6, 14 mit einer hohen Genauigkeit bearbeitet werden müssen, wohingegen die übrigen Komponenten in kostengünstiger Weise mit einer vergleichsweise großen Maßtoleranz, und damit zu vergleichsweise geringen Kosten hergestellt werden können.

Wie weiterhin der Darstellung von Fig. 2 entnommen werden kann, kann im Falle einer thermisch beheizten Presse, bei der zwischen der Stützfläche 8, 18 und der Rückseite der Pressfläche 6, 14 eine weitere, als Hitzeschild dienende Zwischenschicht 24 aus einem besonders hitzebeständigen faserverstärkten Kunststoffmaterial 24 angeordnet ist, und die thermische Isolation in erster Linie durch die erste Zwischenschicht 10, 16 aus einem Thermoisolierwerkstoff mit einer geringeren Temperaturbeständigkeit, jedoch mit einer gegenüber der zweiten Zwischenschicht 24 höheren Wärmeisolationseigenschaft erfolgt, das Prepreg 22 zwischen diesen beiden Zwischenschichten 10, 16 und 24 angeordnet sein.

Wie der Darstellung von Fig. 2 weiterhin zu entnehmen ist, kann im Randbereich des Prepregs 22 eine Dichtung 26 angeordnet sein, welche beispielsweise als Silikonraupe oder auch als O-Ringdichtung ausgestaltet ist, und welche eine randseitige Abdichtung des Prepregs 22 bewirkt, um einen Austritt von verflüssigtem Harzmaterial aus dem Prepreg 22 zu verhindern oder zumindest zu reduzieren.

### Liste der Bezugszeichen

- 1: Mechanische Presse
- 2: Rahmen
- 4: bodenseitiges Ende
- 6: erste Pressfläche / Aufspanntisch
- 8: bodenseitige Stützfläche
- 10: erste Zwischenschicht / Thermoisolierwerkstoff im Bereich der bodenseitigen Stützfläche
- 12: Heizelement
- 14: zweite Pressfläche / Aufspannplatte
- 16: erste Zwischenschicht /Thermoisolierwerkstoff an zweiter Pressfläche
- 18: zweite Stützfläche
- 19: Zylinder
- 20: Pfeil
- 22: Prepreg
- 24: die weitere, als Hitzeschild dienende Zwischenschicht
- 26: Dichtung

## Patentansprüche

1. Verfahren zur Verringerung der Planparallelitätstoleranz einer Presse (1), welche eine erste und eine zweite planparallele Pressfläche (6, 14) umfasst, die durch Beaufschlagung mit einer Druckkraft gegeneinander anstellbar sind,
**gekennzeichnet durch** die folgenden Verfahrensschritte:
- Einbringen eines ein ungehärtetes duroplastisches Kunstharz enthaltenden Prepregs (22) zwischen die erste Pressfläche (6) und eine Stützfläche (8), welche die Druckkraft auf die Pressfläche (6) überträgt,
- Beaufschlagen der ersten und zweiten Pressfläche (6, 14) mit einer vorgegebenen Druckkraft und Zufuhr von Wärmeenergie in das Prepreg (22), und
- Aushärten des Prepregs.

2. Verfahren nach Anspruch 1
**dadurch gekennzeichnet, dass**
das Prepreg (22) durch die zugeführte Wärmeenergie auf eine Temperatur von 80 bis 200 °C, vorzugsweise von 140 bis 180 °C erwärmt wird.

3. Verfahren nach einem der vorhergehenden Ansprüche,
**dadurch gekennzeichnet, dass**
die vorgegebene Druckkraft zwischen 0,2 N/mm² und 15 N/mm², insbesondere zwischen 1 N/mm² und 5 N/mm² liegt.

4. Verfahren nach einem der vorhergehenden Ansprüche,
**dadurch gekennzeichnet, dass** die Druckkraft während des Aushärtens des Prepregs (22) variiert wird.

5. Verfahren nach Anspruch 4,
**dadurch gekennzeichnet, dass**
die Druckkraft verringert wird, wenn sich das Harz durch die zugeführte Wärmeenergie verflüssigt hat, und dass die Druckkraft im Anschluss daran wieder erhöht wird, wenn sich das Harz nach der Verflüssigung während des Aushärtens wieder verfestigt.

6. Verfahren nach einem der vorhergehenden Ansprüche,
**dadurch gekennzeichnet, dass**
im Bereich der Ränder des Prepregs (22) eine Dichtung (26) vorgesehen ist, welche einem Austritt des verflüssigten Kunstharzes aus dem Prepreg (22) während der Beaufschlagung mit der vorgegebenen Druckkraft entgegenwirkt.

7. Verfahren nach einem der vorhergehenden Ansprüche,
**dadurch gekennzeichnet, dass**
das Prepreg (22) zusammen mit einer ersten Zwischenlage (10) aus einem gehärteten Kunststoffmaterial zwischen der Stützflächen (8) und der ersten Pressflächen (6) angeordnet wird.

8. Verfahren nach Anspruch 7,
**dadurch gekennzeichnet, dass**
das Prepreg (22) sandwichartig zwischen der ersten Zwischenlage (10) und einer weiteren Zwischenlage (24) aus einem hitzebeständigen Material zwischen den Stützflächen (8) und der ersten Pressfläche (6) angeordnet wird.

9. Verfahren nach Anspruch 8,
**dadurch gekennzeichnet,dass**
die Presse eine Heizeinrichtung (12) zur Zufuhr von thermischer Energie während des Pressvorgangs umfasst, und dass die erste Zwischenlage (10) eine Thermoisolierplatte zur thermischen Isolation der Stützfläche (10) und die zweite Zwischenlage (24) ein Hitzeschild ist.

10. Verfahren nach einem der vorhergehenden Ansprüche,
**dadurch gekennzeichnet, dass**
zwei oder mehr Prepregs (22) zwischen der ersten Pressfläche (6), der Stützfläche (8) und gegebenenfalls den Zwischenlagen (10) und (24) angeordnet werden.

11. Verfahren nach einem der vorhergehenden Ansprüche,
**dadurch gekennzeichnet, dass**
zusätzlich auch zwischen der zweiten Pressfläche (14) und der zugehörigen Stützfläche (18) sowie gegebenenfalls weiteren Zwischenlagen (16, 24) Prepregs (22) eingebracht werden.

12. Verfahren nach einem der vorhergehenden Ansprüche,
**dadurch gekennzeichnet, dass**
das Prepreg (22) aus einem mit einem Epoxydharz oder einem gegebenenfalls vorverdickten Vinylesterharz oder Polyesterharz imprägnierten, flächigen Fasergebilde besteht.

13. Verfahren nach Anspruch 12,
**dadurch gekennzeichnet,**
**dass** das Prepreg (22) aus einem mit einem Epoxydharz imprägnierten Glasfasergewebe oder Glasfaservlies besteht.

14. Verfahren nach Anspruch 12,
**dadurch gekennzeichnet, dass**
das Prepreg (22) eine Dicke im Bereich von 0,1 bis 1 mm, insbesondere 0,2 bis 0,6 mm besitzt.

15. Verfahren nach einem der vorhergehenden Ansprüche,
**dadurch gekennzeichnet, dass**
die Wärmeenergie durch Heizelemente (12) zugeführt wird, welche den Pressplatten (6, 14) oder den Stützplatten (8, 18) zugeordnet sind.

16. Prepreg (22) zur Verringerung der Planparallelitätstoleranzen einer Presse (1), welche eine erste und eine zweite, im Wesentlichen planparallele Pressfläche (6, 14) umfasst, die durch Beaufschlagung mit einer Druckkraft gegeneinander anstellbar sind, und das zwischen der ersten Pressfläche (6) und einer die Druckkraft auf die erste Pressfläche(6) übertragenden Stützfläche (8) anordenbar ist, zur Durchführung des Verfahrens nach einem der vorhergehenden Ansprüche,
**dadurch gekennzeichnet, dass**
das Prepreg (22) eine Dicke im Bereich von 0,1 bis 1 mm, insbesondere 0,3 bis 0,6 mm besitzt, und dass die Größe des Prepregs (22) im Wesentlichen der Größe der Stützplatte (6) entspricht.

17. Prepreg nach Anspruch 16,
**dadurch gekennzeichnet, dass**
dieses auf eine Platte (10) aus gehärtetem Thermoisolationswerkstoff, insbesondere aus einem faserverstärkten Duroplast, aufgebracht ist, die eine der Größe des Prepregs (22) entsprechende Größe aufweist.

18. Verwendung eines Prepregs (22) nach einem der Ansprüche 16 oder 17 zur Verringerung der Planparallelitätstoleranz einer Presse (1), welche eine erste und eine zweite, im Wesentlichen planparallele Pressfläche (6, 14) umfasst, die durch Beaufschlagung mit einer Druckkraft gegeneinander anstellbar sind, und das zwischen der ersten Pressfläche (6) und einer die Druckkraft auf die erste Pressfläche (6) übertragenden Stützfläche (8) angeordnet und nach Beaufschlagung der ersten und zweiten Pressfläche (6, 14) mit der vorgegebenen Druckkraft ausgehärtet wird.
